# EUROPEAN PATENT APPLICATION

(11) **EP 3 210 487 A1**
(43) Date of publication of application: **30.08.2017**
(21) Application number: 15852898.4
(22) Date of filing: 31.08.2015
(51) Int. Cl.: A44B 18/00

(54) **HOOK-AND-LOOP FASTENER MEMBER AND SEAT USING SAME**

(30) Priority: 20.10.2014 JP 2014213704
(71) Applicant: Tachi-S Co., Ltd., Akishima-shi, Tokyo 196-8611 (JP)
(72) Inventor: NAGASAWA Takahiko, Akishima-shi Tokyo 196-8611 (JP)
(74) Representative: Beetz & Partner mbB
(86) International application number: PCT/JP2015/074631
(87) International publication number: WO 2016/063629

(57) **Abstract**

Provided is a hook-and-loop fastener member capable of removably joining different sheet members, wherein exposed portions of the hook-and-loop fastener member are always of loop type and the hook-and-loop fastener member is therefore soft and friendly on the skin and clothing fibers. A hook-and-loop fastener member is capable of removably joining different sheet members and includes: a first tape body provided at one of principal surfaces with a plurality of loop bodies; a second tape body provided at one of principal surfaces with a plurality of loop bodies; and a third tape body provided at both surfaces with a plurality of hook bodies, the different sheet members being capable of being joined by: disposing the third tape body to be sandwiched between the first tape body and the second tape body; engaging the plurality of loop bodies of the first tape body with the plurality of hook bodies on one of both the surfaces of the third tape body; and engaging the plurality of loop bodies of the second tape body with the plurality of hook bodies on the other of both the surfaces of the third tape body.

## Description

### Technical Field

This invention relates to hook-and-loop fastener members and seats using the same.

### Background Art

Hook-and-loop fasteners capable of removably fastening different members at their surfaces are widely used, for example, in the case where in the field of clothing and the like the members are to be fastened so that they can be unfastened again. Also in the field of seats, such as automotive seats, hook-and-loop fasteners are employed as means for fitting a seat cover onto a seat. Cover-replaceable seats are being developed for which, using the hook-and-loop fasteners, seat covers can be freely replaced in accordance with users' preference.

A general hook-and-loop fastener is formed of a pair of strips, one strip having a surface on which fabric is raised in the shape of hooks, the other having a surface on which fabric is raised in the shape of close-packed loops, wherein the hooks are caught by the loops by firmly pressing the two opposed surfaces against each other and the strips can be freely put together and separated. In addition to this type of hook-and-loop fastener, there are variations, such as a type in which both of hooks and loops are implanted in each surface and, therefore, a hook surface and a loop surface cannot be discriminated from each other, a click type in which hooks are raised in a mushroom shape to give a strong fastening force, and a shark-bite type in which hooks are raised in a sawtooth shape.

Japanese Patent No. 5059791 (Patent Literature 1) exists as a background art in this technical filed. Patent Literature 1 discloses "a hook-and-loop fastener including: a first tape body having a first surface with a plurality of hook bodies projecting therefrom and a second surface; and a second tape body having a third surface capable of adhering directly to the second surface of the first tape body and a fourth surface having a plurality of engageable structures formed thereon and thus being mechanically engageable with the plurality of hook bodies on the first surface, wherein the first tape body is made of transparent material, at least one print design is printed on either of the second surface of the first tape body and the third surface of the second tape body and made visible through the first surface of the first tape body after the first tape body and the second tape body adhere to each other, each of the hook bodies includes a stem extending vertically upward from the first surface to gradually reduce the diameter and then form a neck, a pair of hook portions bilaterally extend at an uppermost end of the neck, a recess is formed between the pair of hook portions and has a recess lowest point, an upper edge of each of the hook portions has an upper edge highest point, a lower edge of each of the hook portions has a lower edge highest point, a vertical distance from the lower edge highest point to a distal end of the lower edge of the hook portion is shorter than a vertical distance from the lower edge highest point to the upper edge highest point, and a vertical distance from the lower edge highest point to the upper edge highest point is shorter than a vertical distance from the recess lowest point to the upper edge highest point".

According to the above hook-and-loop fastener, the print design can be printed on the joint surface between both the tape bodies and can be made less likely to be broken due to frequent use. Furthermore, the engageable structures can be easily engaged with the hook bodies and only a relatively small force is required to separate both the tape bodies from each other. In addition, it is disclosed that when one of the pair of hook portions of the hook body is pulled laterally, a mutually supporting effect is formed in the other hook portion, so that the hook body can withstand a relatively strong lateral pull force.

### Citation List

### Patent Literature

PTL 1: Japanese Patent No. 5059791

### Summary of Invention

### Technical Problem

In order to fit a seat cover onto a seat, such as an automotive seat, using a hook-and-loop fastener as described above, a hook-and-loop fastener component also needs to be provided on the surface of the seat. For example, when the seat cover gets dirty, it is removed from the seat and washed. However, in the absence of any spare seat cover for replacement, there arises a situation where the user temporarily sits on the seat with no seat cover fitted onto the seat.

In doing so, if the hook-and-loop fastener component provided on the seat surface is a hook-side component, since the hook-side component is hard in texture, the exposed hooks may, if the user's skin touches them, give the user a feeling of a foreign body or may be caught by fibers of delicate clothing, such as knit, and damage the clothing.

Patent Literature 1 neither describes anything about the problems as described above and nor includes any disclosure leading to solutions to the problems.

In view of the foregoing, an object of the present invention is to provide a hook-and-loop fastener member capable of removably joining different sheet members, wherein exposed portions of the hook-and-loop fastener member are always of loop type and the hook-and-loop fastener member is therefore soft and friendly on the skin and clothing fibers.

Furthermore, another object of the present invention is to provide a seat which is of a type where a seat cover is fitted thereonto by a hook-and-loop fastener, the seat being soft, comfortable, and less damaging to the skin and clothing fibers even if the seat cover is removed therefrom.

### Solution to Problem

The present invention is directed to a hook-and-loop fastener member capable of removably joining different sheet members and the hook-and-loop fastener member includes: a first tape body provided at one of principal surfaces with a plurality of loop bodies; a second tape body provided at one of principal surfaces with a plurality of loop bodies; and a third tape body provided at both surfaces with a plurality of hook bodies, the different sheet members being capable of being joined by: disposing the third tape body to be sandwiched between the first tape body and the second tape body; engaging the plurality of loop bodies of the first tape body with the plurality of hook bodies on one of both the surfaces of the third tape body; and engaging the plurality of loop bodies of the second tape body with the plurality of hook bodies on the other of both the surfaces of the third tape body.

Furthermore, the present invention is directed to a seat including: a seat cushion serving as a sitting surface; and a seat back provided at a back of the seat cushion and serving as a backrest, a surface of the seat being provided with a hook-and-loop fastener component including a plurality of loop bodies through which a seat cover is removably fittable onto the surface of the seat, the seat cover being provided with a hook-and-loop fastener component including a plurality of loop bodies, the seat cover being fittable onto the surface of the seat by: disposing a hook-and-loop fastener component provided at both surfaces with a plurality of hook bodies between the seat and the seat cover; engaging the loop bodies on the surface of the seat with the hook bodies on one of both the surfaces of the hook-and-loop fastener component provided at both the surfaces with the plurality of hook bodies; and engaging the hook bodies on the other of both the surfaces of the hook-and-loop fastener component provided at both the surfaces with the plurality of hook bodies with the plurality of loop bodies on the seat cover.

### Advantageous Effects of Invention

According to the present invention, there can be achieved a hook-and-loop fastener member capable of removably joining different sheet members, wherein exposed portions of the hook-and-loop fastener member are always of loop type and the hook-and-loop fastener member is therefore soft and friendly on the skin and clothing fibers.

Furthermore, according to the present invention, there can be achieved a seat which is of a type where a seat cover is fitted thereonto by a hook-and-loop fastener, the seat being soft, comfortable, and less damaging to the skin and clothing fibers even if the seat cover is removed therefrom. In addition, since the overlying cover is also of loop type, this brings about further effects, such as prevention of tangling with fiber waste and damage to other clothing during cleaning.

Problems, structures, and effects other than those above will become apparent from the description of the following embodiments.

### Brief Description of Drawings

Fig. 1 is a cross-sectional view showing a schema of a hook-and-loop fastener according to one embodiment of the present invention.
Fig. 2A is a view showing a schema of a seat according to one embodiment of the present invention.
Fig. 2B is a view showing a seat cover for the seat according to the one embodiment of the present invention.
Fig. 3 is a cross-sectional view showing a schema of a hook-and-loop fastener according to one embodiment of the present invention.
Fig. 4 is a cross-sectional view showing a schema of a hook-and-loop fastener according to one embodiment of the present invention.

### Description of Embodiments

Hereinafter, a description will be given of embodiments of the present invention with reference to the drawings. Throughout the description below, the same components in the drawings are designated by the same references and further explanation thereof may be omitted.

### Embodiment 1

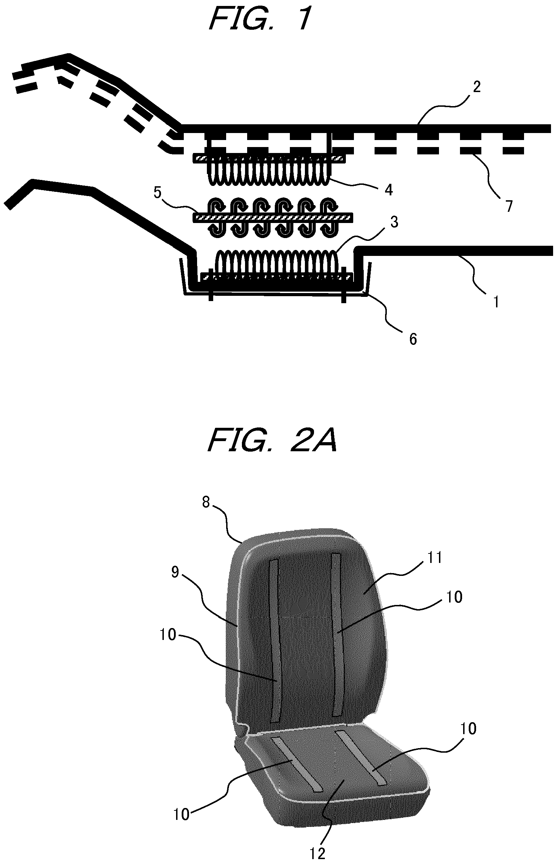

Fig. 1 shows a cross-sectional structure of a hook-and-loop fastener which is an embodiment of the present invention and includes three components. A hook-and-loop fastener member in Embodiment 1 includes three essential components: a loop assembly A3 for a hook-and-loop fastener provided on a surface of base seat upholstery 1 of a seat, such as an automotive seat; a loop assembly B4 for a hook-and-loop fastener provided on a surface of exchangeable seat upholstery 2 of a seat cover or the like; and a double-sided hook assembly 5 for a hook-and-loop fastener disposed sandwiched between the loop assembly A3 for a hook-and-loop fastener and the loop assembly B4 for a hook-and-loop fastener.

Each of the loop assembly A3 for a hook-and-loop fastener and the loop assembly B4 for a hook-and-loop fastener is provided at one surface of a tape-like base material with a plurality of loop-shaped loop bodies. In contrast, the double-sided hook assembly 5 for a hook-and-loop fastener is provided at both surfaces of a tape-like base material with a plurality of hook-shaped hook bodies. Although in Fig. 1 an approximately U-shape is taken as an example of the shape of the hook bodies provided on both surfaces of the base material of the double-sided hook assembly 5 for a hook-and-loop fastener, the hook bodies may be those having other shapes, such as a click type in a mushroom shape or a shark-bite type in a sawtooth shape, as described previously.

A cushion member 7 for which, for example, a fiber wadding or a net-shaped material is used is disposed between the exchangeable seat upholstery 2 and the loop assembly B4 for a hook-and-loop fastener. This cushion member 7 has the effect of, when the exchangeable seat upholstery 2 is fitted onto the base seat upholstery 1, increasing the cushioning properties of the seat and softening the influence of the hook-and-loop fastener member disposed between the base seat upholstery 1 and the exchangeable seat upholstery 2.

A description will be given of a method for fitting the seat cover onto the surface of the seat using the hook-and-loop fastener member in Fig. 1.

First, the double-sided hook assembly 5 for a hook-and-loop fastener is pressed against the loop assembly A3 for a hook-and-loop fastener provided on the surface of the seat, so that the plurality of hooks provided on one surface of the double-sided hook assembly 5 for a hook-and-loop fastener engage with the plurality of loops of the loop assembly A3 for a hook-and-loop fastener and, thus, the double-sided hook assembly 5 for a hook-and-loop fastener is joined to the loop assembly A3 for a hook-and-loop fastener.

Next, the loop assembly B4 for a hook-and-loop fastener provided on the exchangeable seat upholstery 2 is pressed against the double-sided hook assembly 5 for a hook-and-loop fastener, so that the plurality of hooks provided on the other surface of the double-sided hook assembly 5 for a hook-and-loop fastener are engaged with the plurality of loops of the loop assembly B4 for a hook-and-loop fastener and, thus, the loop assembly B4 for a hook-and-loop fastener is joined to the double-sided hook assembly 5 for a hook-and-loop fastener.

The seat cover can be fitted onto the seat surface in the above manner, that is, by sandwiching an intermediate component having hooks on both surfaces, i.e., the double-sided hook assembly 5 for a hook-and-loop fastener, between the loop-like hook-and-loop fastener component provided on the surface of the base seat upholstery 1 and the loop-like hook-and-loop fastener component provided on the surface of the exchangeable seat upholstery 2 and engaging each of the loops on the base seat upholstery 1 side and the loops on the exchangeable seat upholstery 2 side with each of the hooks provided on both surfaces of the double-sided hook assembly 5 for a hook-and-loop fastener.

In relation to the above fitting method, the description has been given of an example where the seat cover is fitted by first engaging the loops on the base seat upholstery 1 side with the hooks on one surface of the double-sided hook assembly 5 for a hook-and-loop fastener and then engaging the hooks on the other surface of the double-sided hook assembly 5 for a hook-and-loop fastener with the loops on the exchangeable seat upholstery 2 side. However, the loops on the seat cover side, i.e., the exchangeable seat upholstery 2 side, may be first engaged with the hooks on one surface of the double-sided hook assembly 5 for a hook-and-loop fastener and the hooks on the other surface of the double-sided hook assembly 5 for a hook-and-loop fastener may be then engaged with the loops on the base seat upholstery 1 side.

In this regard, each of the hook-and-loop fastener components may be formed so that a difference occurs between the engagement force between the loop assembly A3 for a hook-and-loop fastener and the double-sided hook assembly 5 for a hook-and-loop fastener and the engagement force between the loop assembly B4 for a hook-and-loop fastener and the double-sided hook assembly 5 for a hook-and-loop fastener. For example, the loop assembly A 3 for a hook-and-loop fastener and the loop assembly B4 for a hook-and-loop fastener may be formed so that the engagement force between the loop assembly A 3 for a hook-and-loop fastener and the double-sided hook assembly 5 for a hook-and-loop fastener is weaker than the engagement force between the loop assembly B4 for a hook-and-loop fastener and the double-sided hook assembly 5 for a hook-and-loop fastener, in which case in pulling the exchangeable seat upholstery 2 away from the base seat upholstery 1 which are joined together by the hook-and-loop fastener member including the above three components, the exchangeable seat upholstery 2 can be pulled away from the base seat upholstery 1 in a state where the double-sided hook assembly 5 for a hook-and-loop fastener as the intermediate component for a hook-and-loop fastener is always kept engaged with the loop assembly B4 for a hook-and-loop fastener located on the base seat upholstery 1 side.

Thus, the loop assembly A 3 for a hook-and-loop fastener is always exposed on the base seat upholstery 1, so that even when the seat cover is temporarily removed from the seat for the purpose of cleaning, a seat soft and friendly on the passenger's skin and clothing fibers can be provided.

Furthermore, the loop assembly A 3 for a hook-and-loop fastener may be formed to have a lower hardness than the loop assembly B4 for a hook-and-loop fastener.

If the loop assembly A 3 for a hook-and-loop fastener is formed to have a lower hardness than the loop assembly B4 for a hook-and-loop fastener, the feeling of softness of the passenger when sitting on the seat with the seat cover temporarily removed therefrom can be further increased. Furthermore, by providing such a difference in hardness between the loop assembly A 3 for a hook-and-loop fastener and the loop assembly B4 for a hook-and-loop fastener, in removing the seat cover from the seat, the seat cover can be removed, like the above, in a state where the double-sided hook assembly 5 for a hook-and-loop fastener serving as the intermediate component for a hook-and-loop fastener is always attached to the seat cover.

Although the intermediate component for a hook-and-loop fastener in this embodiment, i.e., the double-sided hook assembly 5 for a hook-and-loop fastener, has hook-shaped projections formed integrally on both surfaces of the tape-like base material, an intermediate component for a hook-and-loop fastener having hooks on both surfaces may be formed by sewing or bonding with adhesive together the hook-side components of general hook-and-loop fastener members, i.e., hook-and-loop fastener members each including two components.

As thus far described, according to the hook-and-loop fastener member including three components in this embodiment, there can be provided a hook-and-loop fastener member in which the exposed portions are always of loop type and which is therefore soft and friendly on the skin and clothing fabrics.

Furthermore, there can be provided a seat which is of a type where a seat cover is fitted thereonto by the above hook-and-loop fastener member including three components, the seat being soft, comfortable, and less damaging to the skin and clothing fibers even if the seat cover is removed therefrom.

In relation to the attachment of the loop assembly A 3 for a hook-and-loop fastener to the base seat upholstery 1, the tape body serving as a base material for the loop assembly A 3 for a hook-and-loop fastener can be fixed to the base seat upholstery 1 by sewing or bonding with adhesive. Additionally, if, as shown in Fig. 1, a groove 6 is provided in the surface of the base seat upholstery 1 and the loop assembly A 3 for a hook-and-loop fastener is disposed in the recess of the groove 6, the influence of the loop assembly A 3 for a hook-and-loop fastener on the passenger's skin and clothing fabrics when the seat cover is removed can be further softened.

### Embodiment 2

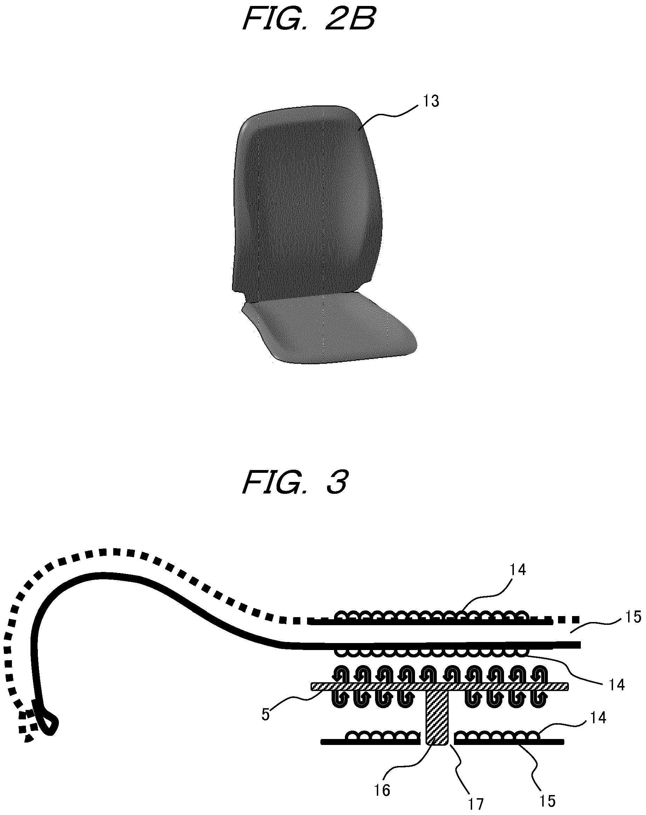

A description will be given of an example where the hook-and-loop fastener member including three components as described in Embodiment 1 is employed for an automotive seat, with reference to Figs. 2A and 2B.

Fig. 2A shows a state where loop assemblies A 10 for a hook-and-loop fastener of the same type as the loop assembly A 3 for a hook-and-loop fastener described in Embodiment 1 are provided on the surface of a base seat 8. Fig. 2B shows a seat cover 13. Although not shown, the back side of the seat cover 13 is provided, at portions corresponding to the loop assemblies A 10 for a hook-and-loop fastener, with loop assemblies B4 for a hook-and-loop fastener.

As shown in Fig. 2A, the loop assemblies A10 for a hook-and-loop fastener are provided in strips on the surface of a seat cushion 12. Likewise, strip-shaped loop assemblies A10 for a hook-and-loop fastener are also provided on the surface of a seat back 11. In fitting the seat cover 13 shown in Fig. 2B on the base seat 8 shown in Fig. 2A, double-sided hook assemblies 5 for a hook-and-loop fastener serving as intermediate components for a hook-and-loop fastener described in Embodiment 1 are interposed between the seat and the seat cover 13 and the hook-and-loop fasteners each including three components are fastened in the manner described in Embodiment 1.

As shown in Fig. 2A, the base seat 8 is provided with a slide fastener 9. In fitting the seat cover 13 onto the base seat 8, the slide fastener 9 can be joined to an unshown concealed fastener on a peripheral portion of the seat cover 13.

As seen from the above, in removing the seat cover 13 from the base seat 8, the seat cover 13 can be removed in a state where the double-sided hook assemblies 5 for a hook-and-loop fastener as intermediate components for a hook-and-loop fastener are always attached to the seat cover 13. Therefore, there can be provided a seat soft, comfortable, and less damaging to the skin and clothing fibers even if the seat cover is removed therefrom.

Although in this embodiment the description has been given of an example where the hook-and-loop fastener member of the present invention is used for both the seat back 11 and the seat cushion 12, the hook-and-loop fastener member of the present invention may be employed, as needed, for either the seat back 11 or the seat cushion 12.

### Embodiment 3

A description will be given of another embodiment of the hook-and-loop fastener including three components according to the present invention with reference to Fig. 3.

In a hook-and-loop fastener in this embodiment, each of two different pieces of upholstery 15 is provided at one surface with a plurality of loops 14 for a hook-and-loop fastener. This structure in which a double-sided hook assembly 5 for a hook-and-loop fastener serving as an intermediate component for a hook-and-loop fastener is disposed sandwiched between these two different components and the plurality of loops provided on each piece of upholstery are engaged with the plurality of hooks provided on both surfaces of the double-sided hook assembly 5 for a hook-and-loop fastener to thus put together the two different pieces of upholstery 15 is the same as that of the hook-and-loop fastener including three components in Embodiment 1.

The hook-and-loop fastener member in this embodiment is different from the hook-and-loop fastener member in Embodiment 1 in that an opening (hole) 17 is provided through one of the pieces of upholstery 15 each provided with loops 14 for a hook-and-loop fastener, for example, the base seat upholstery 1 in Embodiment 1, and the loop assembly A3 for a hook-and-loop fastener provided on the surface of the base seat upholstery 1.

Furthermore, the hook-and-loop fastener member in this embodiment is also different from the hook-and-loop fastener member in Embodiment 1 in that one surface of the double-sided hook assembly 5 for a hook-and-loop fastener serving as an intermediate component for a hook-and-loop fastener is provided with a projection serving as a locating pin (positioning pin) 16 as shown in Fig. 3.

As in Fig. 3, the loops 14 for a hook-and-loop fastener can be aligned with the double-sided hook assembly 5 for a hook-and-loop fastener by providing the opening (hole) 17 in the hook-and-loop fastener component provided on one of the upholstery members and, in the engagement of the double-sided hook assembly 5 for a hook-and-loop fastener with the loops 14 for a hook-and-loop fastener, passing the locating pin (positioning pin) 16 provided on the double-sided hook assembly 5 for a hook-and-loop fastener through the opening (hole) 17 in the hook-and-loop fastener component on the one upholstery member.

Thus, for example, the exchangeable seat upholstery 2 can be first engaged with the double-sided hook assembly 5 for a hook-and-loop fastener and then engaged with the base seat upholstery 1 while being aligned with the base seat upholstery 1. In other words, the seat cover with the double-sided hook assembly 5 for a hook-and-loop fastener attached thereto can be fitted onto the seat body while being aligned with the seat body.

In place of the opening (hole) 17 in the one of the pieces of upholstery 15 provided with loops 14 for a hook-and-loop fastener, a recess may be formed. The alignment can be likewise made by fitting this recess on the locating pin (positioning pin) 16 provided on the double-sided hook assembly 5 for a hook-and-loop fastener.

### Embodiment 4

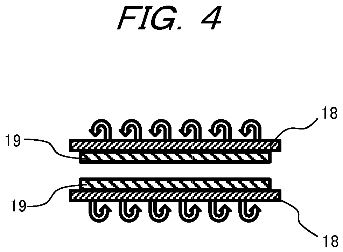

Fig. 4 shows a modification of the intermediate component of the hook-and-loop fastener member including three components according to the present invention, i.e., the double-sided hook assembly 5 for a hook-and-loop fastener.

The double-sided hook assembly 5 for a hook-and-loop fastener in this embodiment is constituted by a pair of hook-and-loop fastener components in each of which hooks 18 for a hook-and-loop fastener are provided on one surface of a tape body serving as a base material and a magnet 19 is provided on the other surface. As shown in Fig. 4, the double-sided hook assembly 5 for a hook-and-loop fastener is formed by attracting the magnets 19 of the two hook-and-loop fastener components together by a magnetic force.

If the double-sided hook assembly 5 for a hook-and-loop fastener has a structure as in this embodiment, the double-sided hook assembly 5 for a hook-and-loop fastener can be easily removed, for example, when the seat cover needs to be frequently removed.

Although in Embodiment 2 the description has been given of an example where the present invention is used for a general automotive seat, the present invention is not limited to this and can be widely used for an automotive seat of connected seat type in which two or more seats are connected, such as one used in a minivan-type minicar or the like, a long seat in which, as in a car seat of a train, seating positions are arranged in line along the car side surface, a domestic chair, a legless chair, and so on.

Furthermore, the present invention is not limited to the above embodiments and includes various modifications. For example, the above embodiments have been merely described in detail in order to facilitate understanding of the present invention and are not necessarily limited to those including their entire structures described above. Furthermore, part of the structure of one embodiment can be replaced with part of the structure of another embodiment and the structure of one embodiment can be added to the structure of another embodiment. Moreover, in relation to part of the structure of each embodiment, another structure can be added thereto or the part of the structure can be deleted or replaced with another structure.

### Reference Signs List

1...base seat upholstery,
2...exchangeable seat upholstery,
3, 10...loop assembly A for a hook-and-loop fastener,
4...loop assembly B for a hook-and-loop fastener,
5...double-sided hook assembly for a hook-and-loop
fastener,
6...groove,
7...cushion member,
8...base seat,
9...slide fastener,
11...seat back,
12...seat cushion,
13...seat cover,
14...loop for a hook-and-loop fastener,
15...upholstery,
16...locating pin (positioning pin),
17...opening (hole),
18...hook for a hook-and-loop fastener,
19...magnet.

## Claims

1. A hook-and-loop fastener member capable of removably joining different sheet members,
the hook-and-loop fastener member comprising:
a first tape body provided at one of principal surfaces with a plurality of loop bodies;
a second tape body provided at one of principal surfaces with a plurality of loop bodies; and
a third tape body provided at both surfaces with a plurality of hook bodies,
the different sheet members being capable of being joined by:
disposing the third tape body to be sandwiched between the first tape body and the second tape body;
engaging the plurality of loop bodies of the first tape body with the plurality of hook bodies on one of both the surfaces of the third tape body; and
engaging the plurality of loop bodies of the second tape body with the plurality of hook bodies on the other of both the surfaces of the third tape body.

2. The hook-and-loop fastener member according to claim 1, wherein an engagement force for engaging the plurality of loop bodies of the first tape body with the plurality of hook bodies of the third tape body is different from an engagement force for engaging the plurality of loop bodies of the second tape body with the plurality of hook bodies of the third tape body.

3. The hook-and-loop fastener member according to claim 1 or 2, wherein the loop bodies provided on the first tape body are formed to have a lower hardness than the loop bodies provided on the second tape body.

4. The hook-and-loop fastener member according to any one of claims 1 to 3, wherein
one of principal surfaces of the third tape body is provided with at least one projection,
at least one recess or opening is provided in the surface of the first tape body on which the plurality of loop bodies are provided, and
the projection of the third tape body is fitted in or passed through the recess or opening of the first tape body, thus aligning the third tape body with the first tape body.

5. The hook-and-loop fastener member according to any one of claims 1 to 4, wherein
the third tape body is formed of:
a fourth tape body having a plurality of hook bodies formed on one surface and a magnet provided on the other surface; and
a fifth tape body having a plurality of hook bodies formed on one surface and a magnet provided on the other surface, and
the fourth tape body and the fifth tape body are releasably attracted by a mutual magnetic force between the magnet of the fourth tape body and the magnet of the fifth tape body.

6. A seat comprising:
a seat cushion serving as a sitting surface; and
a seat back provided at a back of the seat cushion and serving as a backrest,
a surface of the seat being provided with a hook-and-loop fastener component including a plurality of loop bodies through which a seat cover is removably fittable onto the surface of the seat,
the seat cover being provided with a hook-and-loop fastener component including a plurality of loop bodies,
the seat cover being fittable onto the surface of the seat by:
disposing a hook-and-loop fastener component provided at both surfaces with a plurality of hook bodies between the seat and the seat cover,
engaging the loop bodies on the surface of the seat with the hook bodies on one of both the surfaces of the hook-and-loop fastener component provided at both the surfaces with the plurality of hook bodies; and
engaging the hook bodies on the other of both the surfaces of the hook-and-loop fastener component provided at both the surfaces with the plurality of hook bodies with the plurality of loop bodies on the seat cover.

7. The seat according to claim 6, wherein an engagement force for engaging the loop bodies on the surface of the seat with the hook bodies on one of both the surfaces of the hook-and-loop fastener component provided at both the surfaces with the plurality of hook bodies is weaker than an engagement force for engaging the loop bodies on the seat cover with the hook bodies on the other of both the surfaces of the hook-and-loop fastener component provided at both the surfaces with the plurality of hook bodies.

8. The seat according to claim 6 or 7, wherein the loop bodies of the hook-and-loop fastener component provided on the surface of the seat are formed to have a lower hardness than the loop bodies of the hook-and-loop fastener component provided on the seat cover.

9. The seat according to any one of claims 6 to 8, wherein
one of both the surfaces of the hook-and-loop fastener component provided at both the surfaces with the plurality of hook bodies is provided with at least one projection,
the hook-and-loop fastener component provided on the surface of the seat is provided, at a surface including the loop bodies, with at least one recess or opening, and
the projection is fitted in or passed through the recess or opening, thus aligning the seat cover with the seat.

10. The seat according to any one of claims 6 to 9, wherein
the hook-and-loop fastener component provided at both the surfaces with the plurality of hook bodies is formed of:
a first tape body having a plurality of hook bodies formed on one surface and a magnet provided on the other surface; and
a second tape body having a plurality of hook bodies formed on one surface and a magnet provided on the other surface, and
the first tape body and the second tape body are releasably attracted by a mutual magnetic force between the magnet of the first tape body and the magnet of the second tape body.
